# EUROPÄISCHE PATENTANMELDUNG

(11) **EP 0 544 622 A1**
(43) Veröffentlichungstag der Anmeldung: **02.06.1993**
(21) Anmeldenummer: 92810909.9
(22) Anmeldetag: 23.11.1992
(51) Int. Cl.: F24D 12/02

(54) **Zweistoffkesselanlage einer Zentralheizung mit einem Holz- und einem Oelkessel**

(30) Priorität: 27.11.1991 CH 3481/91
(71) Anmelder: UNICAL AG, CH-8546 Kefikon (CH)
(72) Erfinder: van Gameren, Anton, CH-8500 Frauenfeld (CH)
(74) Vertreter: Patentanwälte Breiter + Wiedmer AG

(57) **Zusammenfassung**

Der Vorlauf (18) des Holzkessels (12) ist hydraulisch mit dem unteren Bereich des Oelkessels (14) verbunden. Die Anbaugruppe umfasst eine Verrohrung mit einem aus dem unteren Bereich des Oelkessels (14) austretenden Kesselvorlauf (18), einem in den oberen Bereich des Oelkessels (14) mündenden Rücklauf (44) und einem in den unteren Bereich des Holzkessels (12) mündenden Rücklauf (46) mit Kesselpumpe (48), einen Hochhalteregler (32) mit Drosseleinrichtung (30), Rückschlagventile (40,50) und wenigstens eine Heizungsgruppe (20), welche einen Vorlauf mit je einem Mischventil (22), einer Heizungspumpe (24) und einem Absperrhahn oder -schieber (26) und einen Rücklauf (36) aufweist/aufweisen.

Bevorzugt ist der Verrohrung ein Energiespeicher (78) und/oder ein Boiler (52) zugeordnet.

Beim Erreichen einer einstellbaren minimalen Heizkesseltemperatur (T₁) bleibt der Oelkessel (14) ausgeschalten. Unterhalb dieser Temperatur (T₁) wird das Heizungsrücklaufwasser zum Oelkessel (14) umgeleitet, welcher automatisch einschaltet.

## Beschreibung

Die Erfindung bezieht sich auf eine Zweistoffkesselanlage einer Zentralheizung aus einem Holzkessel mit Verbrennungsluftventilator und einem Oelkessel, ausgerüstet mit Thermostaten und Temperaturfühlern, einer elektronischen Steuerung mit Schaltfeld und einer hydraulischen Anbaugruppe, welche eine Verrohrung, Armaturen und Pumpen umfasst. Weiter betrifft die Erfindung ein Verfahren zum Betrieb eines Zweistoffkessels.

Unter einem Zweistoffkessel wird ein Zentralheizungskessel zur Verfeuerung von Holz einerseits und Oel oder Gas andrerseits verstanden. Einfachheitshalber wird der Kessel zur Verfeuerung von Oel oder Holz mit Oelkessel bezeichnet, auch wenn damit ausschliesslich Erd- oder andere Gase verbrannt werden. Der Antrieb, die elektronische Steuerung und die Darstellung von Anlageteilen, wie Pumpen, Reglern oder Ventilen, auf einem Schaltfeld werden als dem Fachmann bekannt vorausgesetzt.

Aus dem Firmenprospekt GASOGEN DUO der Unical AG, CH-8546 Kefikon, beispielsweise ist eine Kesselkombination für variable Brennstoffnutzung bekannt. Diese Kombination beinhaltet zusätzlich zu einem Holzkessel einen aufgeflanschten Oelkessel, welcher auch für die energiesparende Niedertemperaturtechnik geeignet ist. Eine ausgewogene Dimensionierung und Anordnung von Brennkammer und Nachschaltheizfläche ergeben eine optimale Energieausnutzung und hohe Kesselwirkungsgrade von über 90%. Dazu trägt eine profilierte Abgasführung in einem zylindrischen Feuerraum mit dem Prinzip der Umkehrflamme erheblich bei, ohne dass ein eingesetzter heisser Zylindereinsatz notwendig ist. Die Brennkammer-Geometrie gewährleistet, unabhängig vom Brennerfabrikat, einen sauberen, russfreien Flammenausbrand, hohe Verbrennungswerte und eine geringe Umweltbelastung. Die Kessel haben im Feuerraum eine Wandstärke von bis zu 8 mm und eine maximale Wärmedämmung von 80 mm. Die Umschaltung vom Holz- auf den Oel- oder Gasbetrieb erfolgt bei entsprechender Schalterstellung vollautomatisch.

Alle bekannten Zweistoffkesselanlagen haben einen hydraulischen Anschluss, auch Kesselanbaugruppe oder einfach Anbaugruppe genannt, eingeschlossen eine zugeordnete elektronische Schaltung von Pumpen und Armaturen. Bekannte Anbaugruppen sind kompliziert und beanspruchen so viel Platz, dass ein Schaltkasten erforderlich sein kann, sie sind daher in Herstellung und Unterhalt entsprechend aufwendig.

Der Erfinder hat sich die Aufgabe gestellt, eine Vorrichtung und ein Verfahren der eingangs genannten Art zu schaffen, welche mit einer wesentlich einfacheren Anbaugruppe auskommen, ohne an Wirkungsgrad, Sicherheit, Wirtschaftlichkeit und Bedienungskonfort einzubüssen.

In bezug auf die Vorrichtung wird die Aufgabe erfindungsgemäss dadurch gelöst, dass der Vorlauf des Holzkessels hydraulisch mit dem unteren Bereich des Oelkessels verbunden ist, und die Anbaugruppe eine Verrohrung mit einem aus dem unteren Bereich des Oelkessels austretenden Kesselvorlauf, einem in den obern Bereich des Oelkessels mündenden Rücklauf und einem in den unteren Bereich des Holzkessels mündenden Rücklauf mit Kesselpumpe, einen Hochhalteregler mit Drosseleinrichtung, Rückschlagventile und wenigstens eine Heizungsgruppe umfasst, welche einen Vorlauf mit je einem Mischventil, einer Heizungspumpe und einem Absperrhahn oder -schieber und einen Rücklauf aufweist/aufweisen. Spezielle und weiterbildende Ausführungsformen der erfindungsgemässen Vorrichtung sind Gegenstand von abhängigen Ansprüchen.

Holz- und Ölkessel können in an sich bekannter Weise aufeinandergeflanscht, sonst übereinander oder nebeneinander, auch in Abstand, angeordnet sein.

Durch den gemeinsamen Kesselvorlauf von Holz- und Oelkessel im unteren Bereich der letzteren sowie den Rücklauf zum Oelkessel in dessen oberem Bereich kann die Anbaugruppe, insbesondere deren Verrohrung mit Armaturen, in hohem Masse vereinfacht und daher verbilligt werden.

Die hydraulische Anbaugruppe des erfindungsgemässen Zweistoffkessels kann
- ohne Energiespeicher und ohne Boiler,
- mit Energiespeicher, aber ohne Boiler,
- mit Boiler, aber ohne Energiespeicher, oder
- mit Energiespeicher und mit Boiler

ausgebildet sein.

Die Anbaugruppe kann wegen ihrem einfachen und kompakten Aufbau direkt am Kessel angebaut oder wenigstens teilweise an einer Wand montiert sein.

Durch die Anordnung des Rücklaufs im oberen Teil des Oelkessels kann auf eine Kesselpumpe für den Oelkessel verzichtet werden. Der Oelkessel wirkt als offener Verteiler.

In bezug auf das Verfahren zum Betrieb der Vorrichtung wird die Aufgabe erfindungsgemäss dadurch gelöst, dass während des Anheizens des Holzkessels, mit ausgeschaltetem Oelkessel, beim Erreichen einer einstellbaren minimalen Holzkesseltemperatur T₁ die Kesselpumpe eingeschaltet wird, während des Dauerbetriebs ohne Energiespeicher und ohne Boiler der/den Heizungsgruppe/n aus dem Kesselvorlauf Warmwasser zugeführt wird, und das Heizungsrücklaufwasser
- bei wenigstens der minimalen Holzkesseltemperatur T₁ zum Erreichen einer einstellbaren Rücklauftemperatur T₂ im Rücklauf durch den Hochhalteregler mit heissem Wasser aus dem Kesselvorlauf gemischt wird, wobei der Oelkessel abgeschaltet bleibt, oder
- unterhalb der minimalen Holzkesseltemperatur T₁ durch Schliessen des Hochhaltereglers in den Rücklauf zum Oelkessel umgeleitet wird, wobei dieser automatisch eingeschaltet und die Kesselpumpe ausgeschaltet wird.

Spezielle und weiterbildende Ausführungsarten des erfindungsgemässen Verfahrens sind Gegenstand von abhängigen Ansprüchen.

Alle Regel- und Umschaltprozesse erfolgen nach der Eingabe der Parameter bevorzugt in dem Fachmann bekannter, programmgesteuerter Weise.

Die minimale Holzkesseltemperatur T₁, bei welcher die Kesselpumpe eingeschaltet wird, liegt im Bereich von 50 - 70° C, vorzugsweise bei etwa 60° C. Diese Temperatur ist abhängig vom Fabrikat des Zweistoffkessels, von dessen hydraulischer Anbaugruppe und vom Verwendungszweck der Heizgruppe/n. In Extremfällen sind also durchaus Holzkesseltemperaturen möglich, welche beträchtlich von 60° C. abweichen.

Auch die Rücklauftemperatur T₂ des allenfalls im Hochhalteregler mit heissem Wasser versetzten Heizungsrücklaufwassers ist im wesentlichen vorrichtungs- und verwendungsspezifisch. Diese Rücklauftemperatur T₂ kann beispielsweise bis etwa 20° C unter der minimalen Holzkesseltemperatur T₁ liegen.

Beim Anfeuern des Holzkessels sind die Kesselpumpe und eine allfällige Boilerladepumpe ausgeschaltet. Eine thermische Strömung findet lediglich im Holzkessel selbst statt. Die erzeugte Wärme dient vorerst nur der Temperaturerhöhung des Holzkessels, damit der Taupunkt im Kessel möglichst rasch überschritten werden kann.

Bei einer Zweistoffkesselanlage ohne Energiespeicher ist beim Anfeuern des Holzkessels die Heizungspumpe zur Vermeidung eines ungewollten Wärmeentzugs aus dem Kessel auch ausgeschaltet und wird beim Erreichen der minimalen Kesseltemperatur T₁ gleichzeitig mit der Kesselpumpe eingeschaltet.

Bei einer Zweistoffkesselanlage mit Energiespeicher ist die Heizungspumpe unabhängig von der minimalen Kesseltemperatur T₁ in Betrieb und fördert Wasser aus dem Energiespeicher zum Wärmeverbraucher.

Bei ungenügender Zugabe von Brennholz oder nach dem Abbrand des Holzes sinkt die Temperatur im Holzkessel allmählich unter die minimale Holzkesseltemperatur T₁. Nach einem entsprechenden Impuls des Minimalwächters im Holzkessel werden die Kesselpumpe und mit z.B. etwa 30 min Verzögerung der Brennluftventilator des Holzkessels ausgeschaltet. Bei automatischem Betrieb, welcher am Wahlschalter als Normalbetrieb eingestellt werden kann, wird gleichzeitig der Oelkessel in Betrieb gesetzt.

Bei ausgeschalteter Kesselpumpe wird der Holzkessel nicht mit Wasser durchströmt und bleibt deshalb kalt.

Ein Oeffnen der Türe des Holzkessels führt vorzugsweise automatisch von der Oel- zur Holzfeuerung.

Bei einer Zweistoffkesselanlage mit einem Energiespeicher ist während der Holzfeuerung der Rücklauf zum Speicher geöffnet , derjenige zum Oelkessel geschlossen.

Erzeugt der Holzkessel mehr Wärme als von der/den Heizungsgruppe/n verbraucht wird, wird diese Wärme im Energiespeicher gelagert, der Speicher wird durch Zufuhr von Warmwasser geladen.

Nach dem Abbrand des Holzes sinkt die Temperatur im Holzkessel unter die festgelegte minimale Holzkesseltemperatur T₁. Dadurch werden wiederum die Kesselpumpe und mit z.B. etwa 30 min Verzögerung der Verbrennungsluftventilator des Holzkessels ausgeschaltet. Der Holzkessel gibt nun keine Wärme mehr ab und ist hydraulisch abgeschaltet.Die Heizungspumpe wirkt nach der Abschaltung des Holzkessels direkt auf den Energiespeicher, welcher entladen wird.

Reicht die Temperatur des Speicherwassers nicht mehr aus, um die benötigte Heizungsvorlauftemperatur zu gewährleisten, wird automatisch auf Oelbetrieb umgestellt. Das Rücklaufumschaltventil schaltet den Energiespeicher ab und gibt den Heizungswasserrücklauf zum Oelkessel frei. Beim Oelbetrieb bleiben der Holzkessel und der Energiespeicher kalt.

Ein Oeffnen der Türe des Holzkessels führt wiederum vorzugsweise automatisch zur Umstellung von der Oel- zur Holzfeuerung. Das Rücklaufumschaltventil schliesst zum Oelkessel und öffnet wieder zum Speicher.

Bei einer Anbaugruppe mit einem Boiler, mit oder ohne Energiespeicher, wird zu dessen Aufheizen vorzugsweise auch bei kaltem Holzkessel auf Oel umgeschaltet. Nach der Boilerladung wird wieder auf den normalen Dauerbetrieb umgeschaltet, bei einer Anbaugruppe mit einem Energiespeicher auf Speicherbetrieb.

Zweckmässig geht während der Boilerladung keine Wärme zum Energiespeicher oder zu der/den Heizungsgruppe/n, damit die volle Heizleistung des Oelkessels der Warmwasseraufbereitung zur Verfügung steht.

Die Erfindung wird anhand von in der Zeichnung dargestellten Ausführungsbeispielen, welche auch Gegenstand von abhängigen Patentansprüchen sind, näher erläutert. Es zeigen schematisch:
- Fig. 1 eine Zweistoffkesselanlage,
- Fig. 2 eine Zweistoffkesselanlage mit einem Boiler,
- Fig. 3 eine Zweistoffkesselanlage mit einem Energiespeicher,
- Fig. 4 eine Zweistoffkesselanlage mit einem Boiler und einem Energiespeicher, und
- Fig. 5 eine perspektivische Darstellung einer Zweistoffkesselanlage gemäss Fig. 1.

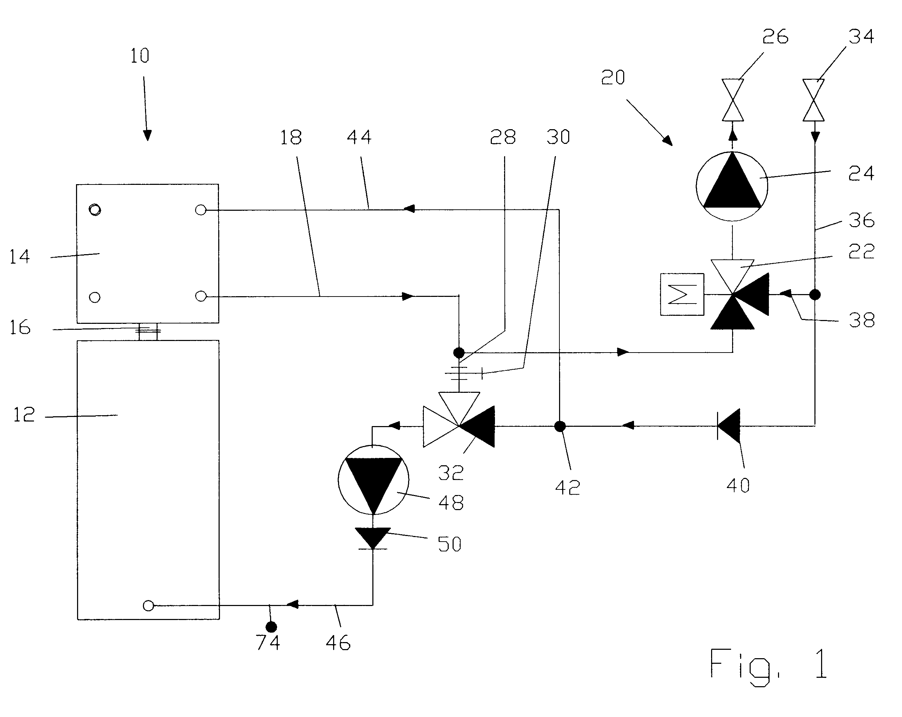

Die in Fig. 1 dargestellte Zweistoffkesselanlage umfasst, wie in den übrigen Figuren, einen Zweistoffkessel 10 mit einem Holzkessel 12 und einem aufgeflanschten Oelkessel 14. Der Vorlauf 16 des Holzkessels 12 führt in den unteren Bereich des Oelkessels 14.

In diesen unteren Bereich des Oelkessels 14 mündet der Kesselvorlauf 18, welcher das Warmwasser von Holz- und Oelkessel 12,14 abführt.

Von diesem Kesselvorlauf 18 zweigt wenigstens eine Heizungsgruppe 20 ab, welche im Vorlauf ein Mischventil 22, eine Heizungspumpe 24 und einen Absperrhahn oder -schieber 26 umfasst.

Mit einem weiteren Absperrhahn oder -schieber 34 ist ein Heizungswasserrücklauf 36 verschliessbar. Von diesem zweigt eine Verbindungsleitung 38 zu einem Mischventil 22 ab. In Fliessrichtung des kalten Heizungsrücklaufwassers ist nach dieser Abzweigung 38 ein als Rückschlagklappe ausgebildetes erstes Rückschlagventil 40 angeordnet. Anschliessend folgt eine Verzweigung 42, nach welcher der Heizungswasserrücklauf 36 als Rücklauf 44 zum oberen Bereich des Oelkessels 14 und/oder als Rücklauf 46 zum unteren Bereich des Holzkessels 12 führt. Der Rücklauf 46 führt über den Hochhalteregler 32, eine Kesselpumpe 48 und ein zweites als Rückschlagklappe ausgebildetes Rückschlagventil 50.

Eine in Fliessrichtung des Heisswassers vor der/den Heizungsgruppe/n 20 abzweigende Verbindungsleitung 28 führt zu einer als Drosselklappe ausgebildeten Drosseleinrichtung 30, welche einem Hochhalteregler 32 zugeordnet ist.

Beim Oelkesselbetrieb ist der Hochhalteregler 32 für den Rücklauf 46 zum Holzkessel 12 geschlossen, auch selbsttätig. Beim Holzkesselbetrieb dagegen ist der Hochhalteregler 32 aktiv. Über die Verbindungsleitung 28 und die Drosseleinrichtung 30 kann aus dem Kesselvorlauf 18 soviel Warmwasser zugeschossen werden, dass die eingestellte Kesselrücklauftemperatur T₂ erreicht wird. Dazu wird vorzugsweise die Rücklauftemperatur T₂ im Rücklauf 46, z.B. kurz vor dem Holzkessel 12 oder im Hochhalteregler 32 selbst, mit einem Temperaturfühler 74 gemessen.

Die für die Durchführung der Erfindung notwendigen, jedoch an sich bekannten und die Erfindung selbst nicht kennzeichnenden übrigen Messfühler, beispielsweise im Holzkessel 12, im Oelkessel 14, im Kesselvorlauf 18, im Heizungswasserrücklauf 36, 44, und die zugehörige Elektronik sind der Uebersichtlichkeit wegen weggelassen.

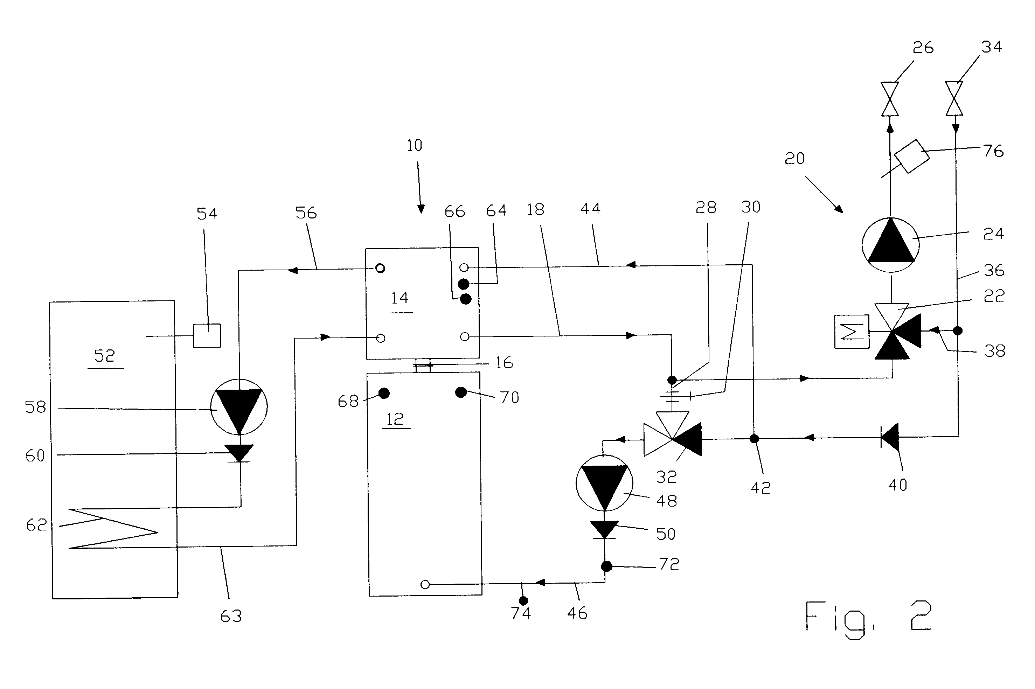

Fig. 2 umfasst einen Zweistoffkessel 10 mit einer Anbaugruppe gemäss Fig. 1 und zusätzlich einen Boiler 52 mit einem zugeordneten Boiler-Temperaturfühler 54.

Vom oberen Bereich des Oelkessels 14 zweigt ein Boilervorlauf 56 ab, welcher über eine Boilerladepumpe 58 und ein drittes als Rückschlagklappe ausgebildetes Rücklaufventil 60 in den unteren Bereich des Boilers führt. Dort wird der Boilervorlauf 56 in den Innenraum geführt, wo er eine Wärmeaustauscherspirale 62 bildet. Die Leitung wird als Boilerrücklauf 63 in den unteren Bereich des Oelkessels 14 zurückgeführt.

Im Vergleich zu Fig. 1 sind in Fig. 2 noch einige in Ausführungsvarianten nach andern Figuren auch vorhandene, aber einfachheitshalber wenigstens zum Teil weggelassene Details eingetragen:
- In der Tauchhülse 64 ein Regelthermostat, ein Thermometer und ein Sicherheitsthermostat im Ölkessel 14,
- ein Fühler 68 der thermischen Ablaufsicherung im Holzkessel 12,
- in der Tauchhülse 70 ein Regelthermostat, ein Temperaturwächter und ein Sicherheitsthermostat im Holzkessel 12,
- eine Abzweigung 72 zu einem Expansionsgefäss, und
- ein Temperaturmessfühler 76 in der Heizungsgruppe 20.

Der Boiler 52 ändert nichts an der Anbaugruppe, der Unterschied liegt - wie bereits erwähnt - lediglich in der Regelung.

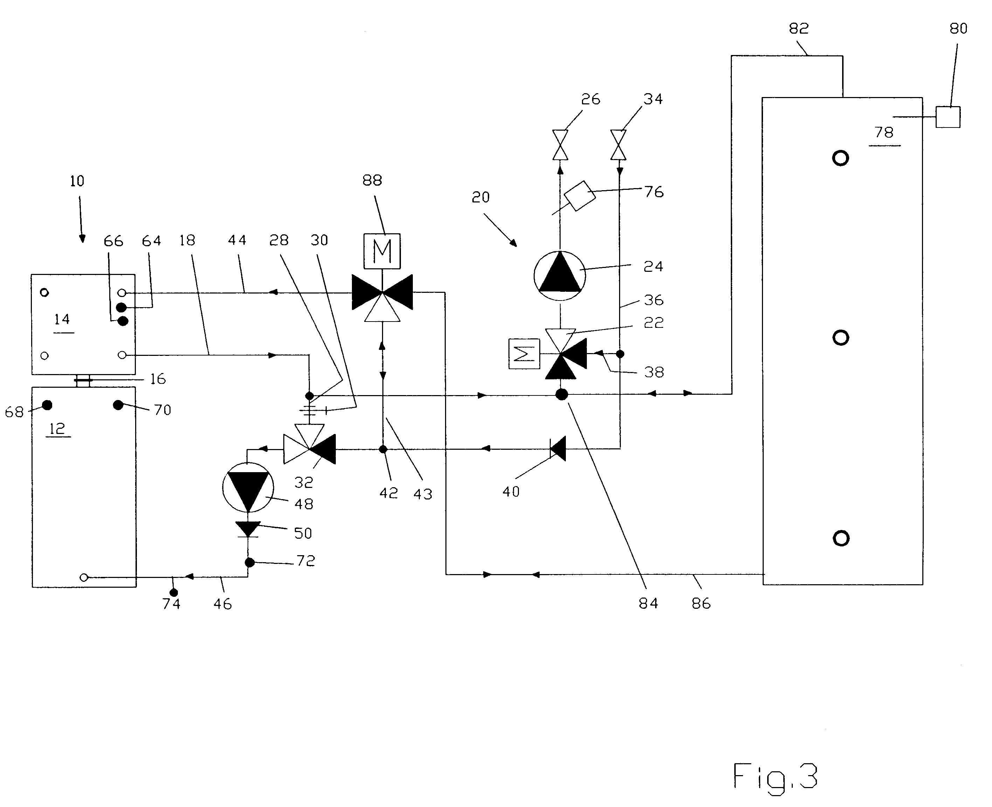

Die Zweistoffkesselanlage gemäss Fig. 3 umfasst einen Energiespeicher 78 mit einem Speicher-temperaturfühler 80. Der mit Wasser gefüllte Energiespeicher 78 hat ein Volumen das sich einerseits nach dem Leistungsbereich der Zweistoffkesselanlage und andererseits nach den anlagespezifischen Gegebenheiten und den Komfortansprüchen richtet.

Die Speichervorlaufleitung 82 ist eine Fortsetzung des Kesselvorlaufs 18 nach der Verzweigung 84 zu der in Fliessrichtung des Warmwassers letzten Heizungsgruppe 20. Die Speicherrücklaufleitung 86 führt über ein Rücklaufumschaltventil 88 und eine Rücklaufleitung 43 zu der Verzweigung 42.

Erzeugt der Holzkessel 12 mehr Wärme als die Heizungsgruppe/n 20 verbraucht/verbrauchen, wird der Energiespeicher 78 aufgeladen. Beim Speicherbetrieb wirkt die Heizpumpe 24 direkt auf den Energiespeicher 78, dieser wird entladen.

Beim Ölbetrieb ist das Rücklaufumschaltventil 88 zum Energiespeicher 78 geschlossen, zum Ölkessel 14 dagegen geöffnet.

Das Heizungsrücklaufwasser wird ab der Verzweigung 42 über die Rücklaufleitung 43 zum Ölkessel 14 geführt und über Kesselvorlauf 18 wieder zu der/den Heizungsgruppe/n 20. Der Energiespeicher 78 und der Holzkessel 12 bleiben bei der Ölfeuerung kalt.

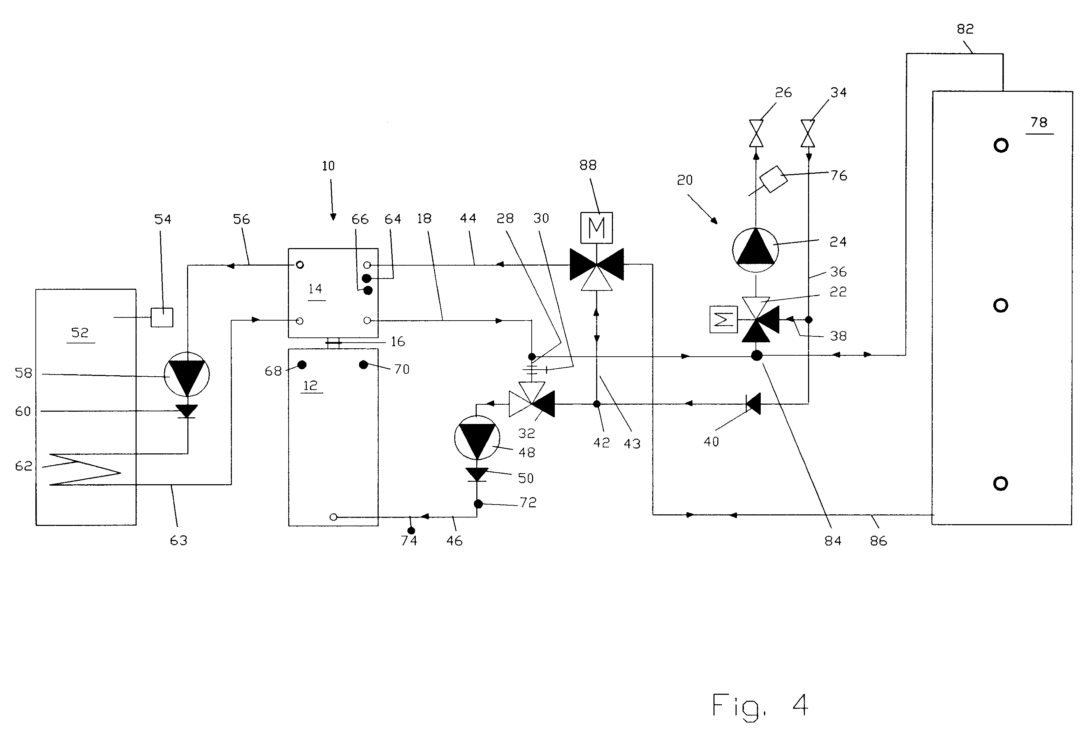

Fig. 4 ist im wesentlichen eine Kombination der Figuren 2 und 3, der Boiler 52 ändert wiederum nichts an der Anbaugruppe gemäss Fig. 3. Der Unterschied liegt wie erwähnt ausschliesslich in der Regelung.

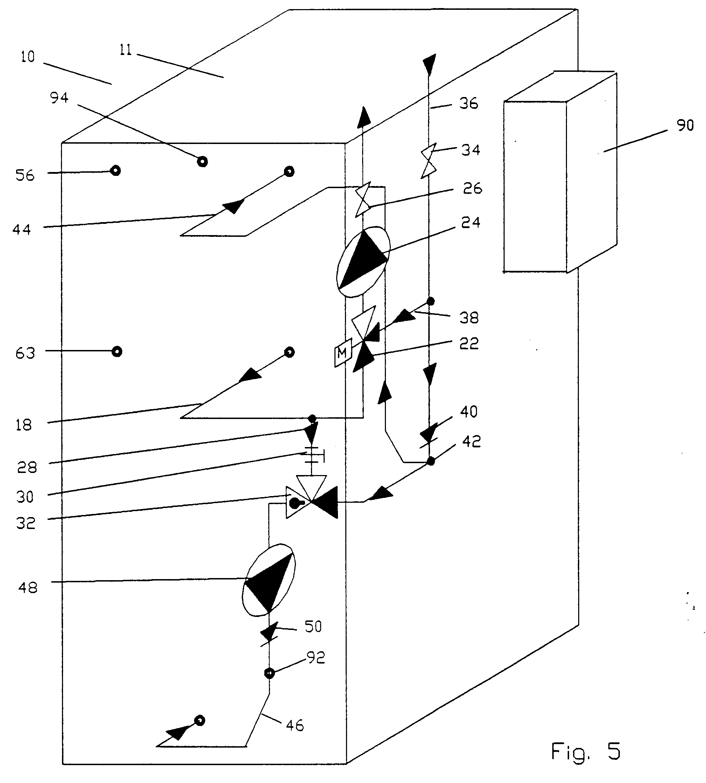

In der Ausführungsform gemäss Fig. 5 ist die Zweistoffkesselanlage in einem quaderförmigen Kesselgehäuse 11 angeordnet, Holz- und Oelkessel sind nicht einzeln sichtbar. Das Kesselgehäuse 11 ist von hinten gesehen dargestellt.

Am Kesselgehäuse 11 für die Zweistoffkesselanlage ist ein weiteres Gehäuse 90 angebracht, mit einem von hinten nicht sichtbarem Schaltfeld.

Die Anbaugruppe entspricht im wesentlichen Fig. 1, sie ist am Kesselgehäuse 11 für den Zweistoffkessel 10 angebracht.

Weiter sind Anschlussstutzen für den Boilervorlauf 56 und Boilerrücklauf 63 zu erkennen.

Ebenso ist ein nicht weiter gezeigter Anschluss 92 für ein Druckgefäss ausgebildet. Schliesslich ist zwischen dem Rücklauf 44 zum Oelkessel und dem Boilervorlauf 56 ein Sicherheitsvorlauf 94 für ein Expansionsgefäss angedeutet.

In einzelnen Figuren angegebene Details sind ohne weiteres auf andere Figuren übertragbar, wo sie einfachheitshalber wenigstens teilweise weggelassen sind. Selbstverständlich betrifft dies Details für einen Boiler und/oder einen Energiespeicher nur, sofern das entsprechende Gerät eingezeichnet ist.

## Patentansprüche

1. Zweistoffkesselanlage einer Zentralheizung aus einem Holzkessel (12) mit Verbrennungsluftventilator und einem Oelkessel (12), ausgerüstet mit Thermostaten und Temperaturfühlern, einer elektronischen Steuerung mit Schaltfeld und einer hydraulischen Anbaugruppe, welche eine Verrohrung, Armaturen und Pumpen umfasst,
dadurch gekennzeichnet, dass
der Vorlauf (18) des Holzkessels (12) hydraulisch mit dem unteren Bereich des Oelkessels (14) verbunden ist, und die Anbaugruppe eine Verrohrung mit einem aus dem unteren Bereich des Oelkessels (14) austretenden Kesselvorlauf (18), einem in den oberen Bereich des Oelkessels (14) mündenden Rücklauf (44) und einem in den unteren Bereich des Holzkessels (12) mündenden Rücklauf (46) mit Kesselpumpe (48), einen Hochhalteregler (32) mit Drosseleinrichtung (30), Rückschlagventile (40,50) und wenigstens eine Heizungsgruppe (20) umfasst, welche einen Vorlauf mit je einem Mischventil (22), einer Heizungspumpe (24) und einem Absperrhahn oder -schieber (26) und einen Rücklauf (36) aufweist/ aufweisen.

2. Zweistoffkesselanlage nach Anspruch 1, dadurch gekennzeichnet, dass die Anbaugruppe im wesentlichen aus
- einem Heizungswasserrücklauf (36) mit einem Absperrhahn oder -schieber (34), einer abzweigenden Verbindungsleitung (38) zum Mischventil (22) der Heizungsgruppe/n (20), einem ersten Rückschlagventil (40), einer Verzweigung (42) mit dem vorzugsweise keine Oelkesselpumpe aufweisenden Rücklauf (44) zum Oelkessel (14) einerseits und dem Hochhalteregler (32), der Kesselpumpe (48), einem zweiten Rückschlagventil (50) und dem Rücklauf (46) zum Holzkessel (12) andrerseits, und
- dem Kesselvorlauf (18) zu der/den Heizungsgruppe/n (20) mit einer abzweigenden Verbindungsleitung (28) zum Hochhalteregler (32) über eine Drosseleinrichtung (30)
besteht.

3. Zweistoffkesselanlage nach Anspruch 1 oder 2, dadurch gekennzeichnet, dass der Anbaugruppe ein wärmeisolierter Wasserbehälter als Energiespeicher (78) mit Speicher-Temperaturfühler (80) zugeordnet ist.

4. Zweistoffkesselanlage nach Anspruch 2 oder 3, dadurch gekennzeichnet, dass die Speichervorlaufleitung (82) nach der letzten Heizungsgruppe (20) bei der Verzweigung (84) vom Kesselvorlauf (18) wegführt, und die Speicherrücklaufleitung (86) über ein Rücklaufumschaltventil (88) in die Rücklaufleitung (43) zum Holzkessel (12) führt.

5. Zweistoffkesselanlage nach einem der Ansprüche 1 bis 4, dadurch gekennzeichnet, dass der Anbaugruppe ein mit dem Oelkessel (14) hydraulisch verbundener Boiler (52) mit Boiler-Temperaturfühler (54) zugeordnet ist, vorzugsweise mit in einen vom oberen Bereich des Oelkessels (14) abzweigenden Boilervorlauf (56) eingebauten Boilerladepumpe (58) und drittem Rückschlagventil (60).

6. Zweistoffkesselanlage nach einem der Ansprüche 1 bis 5, dadurch gekennzeichnet, dass die Anbaugruppe direkt am Kessel (10), am Energiespeicher (78) angebaut und/oder an einer Wand montiert ist.

7. Verfahren zum Betrieb einer Vorrichtung nach einem der Ansprüche 1 bis 6,
dadurch gekennzeichnet, dass
während des Anheizens des Holzkessels (12), mit ausgeschaltetem Oelkessel (14), beim Erreichen einer einstellbaren minimalen Holzkesseltemperatur (T₁) die Kesselpumpe (48) eingeschaltet wird, während des Dauerbetriebs ohne Energiespeicher (78) und ohne Boiler (52) der/den Heizungsgruppe/n (20) aus dem Kesselvorlauf (18) Warmwasser zugeführt wird, und das Heizungsrücklaufwasser
- bei wenigstens der minimalen Holzkesseltemperatur (T₁) zum Erreichen einer einstellbaren Rücklauftemperatur (T₂) im Rücklauf (46) durch den Hochhalteregler (32) mit heissem Wasser aus dem Kesselvorlauf (18) gemischt wird, wobei der Oelkessel (14) abgeschaltet bleibt, oder
- unterhalb der minimalen Holzkesseltemperatur (T₁) durch Schliessen des Hochhaltereglers (32) in den Rücklauf (44) zum Oelkessel (14) umgeleitet wird, wobei dieser automatisch eingeschaltet und die Kesselpumpe(48)ausgeschaltet wird.

8. Verfahren nach Anspruch 7, dadurch gekennzeichnet, dass beim Absinken der Holzkesseltemperatur (T₁) unter den einstellbaren Minimalwert der Verbrennungsluftventilator nach einer einstellbaren Zeitperiode, vorzugsweise nach etwa 30 min, abgestellt wird.

9. Verfahren nach Anspruch 6 oder 7, dadurch gekennzeichnet, dass beim Oeffnen der Türe des Holzkessels (12) automatisch auf Holzkesselbetrieb umgeschaltet, und der allenfalls eingeschaltete Oelkessel (14) ausgeschaltet wird.

10. Verfahren nach einem der Ansprüche 7 bis 9 zum Dauerbetrieb mit Energiespeicher (78), dadurch gekennzeichnet, dass bei Holzkesselbetrieb das Rücklaufumschaltventil (88) über die Rücklaufleitung (43) zum Oelkessel (14)geschlossen und zum Energiespeicher (78) geöffnet wird.

11. Verfahren nach einem der Ansprüche 7 bis 9 zum Dauerbetrieb mit Energiespeicher (78), dadurch gekennzeichnet, dass unterhalb der einstellbaren minimalen Holzkesseltemperatur (T₁) die Heizungspumpe (24) direkt auf den Energiespeicher (78) einwirkt.

12. Verfahren nach Anspruch 11, dadurch gekennzeichnet, dass beim Unterschreiten einer charakteristischen Speichertemperatur (T₃) das Rücklaufumschaltventil (88) für die Speicherrückleitung (86) geschlossen und, unter gleichzeitigem Aufheizen des Oelkessels (14), für den Rücklauf (44) zum Oelkessel (14) geöffnet wird, wobei Holzkessel (12) und Energiespeicher (78) kalt bleiben.

13. Verfahren nach einem der Ansprüche 7 bis 12 zum Dauerbetrieb mit einem Boiler (52), dadurch gekennzeichnet, dass bei arbeitender Boilerladepumpe (58) kein Warmwasser zum Energiespeicher (78) und/oder zu der/den Heizungsgruppe/n (20) geführt wird.

14. Verfahren nach Anspruch 13, dadurch gekennzeichnet, dass unterhalb der einstellbaren minimalen Heizkesseltemperatur (T₁) der Oelkessel (14) zum Aufheizen des Boilers (52) benutzt wird.
